# EUROPEAN PATENT APPLICATION

(11) **EP 1 466 949 A1**
(43) Date of publication of application: **13.10.2004**
(21) Application number: 03008352.1
(22) Date of filing: 10.04.2003
(51) Int. Cl.: C09D 5/16, A01N 31/06, A01N 27/00, A01N 35/06, A01N 37/04, A01N 37/18, A01N 37/20, A01N 37/36, A01N 43/24, A01N 47/06, A01N 47/08

(54) **Non-toxic coating composition, methods of use thereof and articles protected from attachment of biofouling organisms**

(71) Applicant: Symrise GmbH & Co. KG, 37603 Holzminden (DE)
(72) Inventor: Pelzer, Ralf, 37699 Fürstenberg (DE); Wöhrle, Ingo, 37603 Holzminden (DE)
(74) Representative: Eisenführ, Speiser & Partner

(57) **Abstract**

The present invention relates to non-toxic coating compositions comprising menthol and/or isopulegol and at least one further active ingredient which provide protection to surfaces coated therewith from attachment of various biofouling organisms. These compositions are advantageously used in paint, varnish and sealant formulations.

## Description

The present invention relates to non-toxic coating compositions comprising active ingredients which provide protection to surfaces coated therewith from attachment of various biofouling organisms. These compositions are advantageously used in paint, varnish and sealant formulations.

The present invention in particular relates to non-toxic coating compositions comprising, a mixture of (i) menthol and/or isopulegol and (ii) at least one further active ingredient (as further defined below).

Biocides are commonly used in a variety of coating materials having diverse applications. In marine paints, for example, biocides protect underwater structures against attachment of a wide range of biofouling organisms, such as algae, barnacles, ship worms and other aquatic nuisance species. In lakes and rivers, biocides are used to protect underwater structures from freshwater organisms, such as zebra mussels. It has been found that microorganisms, their viscous, bio-organic product and absorbed organic matter constitute a tenacious slime which forms on the surfaces of submerged structures. The initial organisms in this fouling sequence are bacteria, followed by a biotic progression of diatoms, hydrids, algae, bryozoans, protozoans and finally macrofoulants. Macrofoulants tend to be rugophilic, i.e., settling on roughened surfaces in preference to smooth surfaces.

The fouling of ship bottoms is a longstanding problem, which contributes to speed reduction and increased fuel consumption. The problem of fouling is not limited to ships, however, but extends to other underwater structures, as well. Buoys can shift due to the excessive weight of fouling organisms. Wood pilings in berthing facilities undergo structural weakening and ultimate destruction due to ship worm and fungal attack. The fouling of intake screens of municipal water supply systems can lead to reduced flow rates and accelerated corrosion. Concrete or ferro-cement structures, e.g., dams, are also adversely affected by biofouling organisms.

It is understood by those of skill in the art that a marine coating must be water resistant in order to provide practical and effective protection. The expression "water resistant," as used in describing the composition of the invention, refers to its ability to provide a durable, protective barrier that can effectively withstand hydrolytic attack and is essentially impermeable to water. Water resistance is intrinsically important to marine coatings because, for example, it is prohibitively expensive to re-coat most items in marine service, as they must be put into dry-dock or otherwise removed from the water in order to be re-coated. It is also desirable, for example, to minimize the time and expense of cleaning fouling organisms from the coated surface. The protection provided by a marine coating, therefore, whether it be against corrosion, fouling, abrasion, etc., should be effective over a period of at least months, and, ideally, over at least several years. A coating composition that is not water resistant would be short lived in the water rather than meeting the performance criteria of a marine coating.

The majority of commercial anti-fouling coatings include organometallic compounds which are potent biocides that leach over time from the coating material. Tributyltin (TBT), for example, is known to be highly toxic to shellfish. Anderson and Dally, Oceans '86, IEEE Publication #86 CH2363-0 (1986). Acute toxicity in invertebrates and vertebrates occurs at concentrations as low as 1 µg (micrograms) per liter. Laughlin et al., Mar. Ecol. Prog. Ser., 48: 29-36 (1988). Cuprous oxide and zinc oxide, which are other commercially used antifoulants, also function by releasing heavy metals, i.e., copper and zinc, into the marine environment.

In latex architectural paints and wood stains, biocides provide in-can protection against microbiological contamination that can cause odor and changes in viscosity and color, and protect the dried film and underlying substrate from damaging microorganisms. Such coating materials must likewise be water resistant in order to provide effective protection to coated surfaces.

Biocides are also conventionally utilized in elastomeric coatings, adhesives, caulks, glazing compounds, joint cements and the like, which are also water resistant.

Because certain biocides currently used in the above-mentioned products have been shown to be ecologically harmful, a number of international agencies, whose missions include monitoring environmental quality, are urging the curtailment and eventual termination of their manufacture and use. A proposal has been made by the International Maritime Organization (IMO), for example, that all antifoulant coatings that contain TBT, as well as other organotin compounds which have a toxic effect on a wide range of marine organisms, would be banned worldwide by the year 2003. Consequently, manufacturers of such products are faced with the prospect of changing existing formulations to include alternative agents that are, at once, effective in preventing attachment and growth of biofouling organisms and environmentally benign. Other criteria that must be taken into account in developing acceptable substitutes for ecologically harmful biocides include chemical compatibility with other components in the coating composition, physical compatibility with the dried film and substrate to which the coating is applied, the safety of those handling or using the substitute agents themselves or coating materials containing them and the cost of their production.

WO 01/95718 relates to non-toxic coating compositions which provide protection to surfaces coated therewith from attachment of various biofouling organisms using mainly terpenes and terpene derivatives, in particular (-)-menthol, (-)-trans-p-menthan-3,8-diol, (-)-menthyl chloride, 3-[[5-methyl-2-(1-methylethyl)cyclohexyl]oxy]-1,2-propanediol, (-)-isopulegol and (-)-menthone. A mixture consisting of equal parts of (-)-menthol and (-)-trans- p-menthan-3,8-diol is described in Example 7 (page 15 and 16), which resulted in a lower percentage of settlement of barnacles.

It is therefore one object of the present invention to provide paints or coating compositions with comparable or better antifouling activity, preferably over a prolonged period of time, especially 3 - 5 years.

### Summary of The Invention

In accordance with first aspect, the present invention provides a non-toxic paint or coating composition comprising
(i) menthol and / or isopulegol
   and
(ii) a compound selected from the group consisting of
   a) menthyl esters of a (preferably natural occurring) hydroxycarboxylic acid having 2 to 6 carbon atoms, which are in turn optionally esterified by C₁-C₄ carboxylic acids on the hydroxy group;
   b) compounds of formula (I): 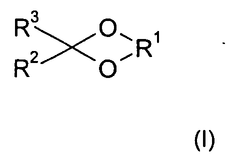 wherein
      R¹ represents a C₂-C₆-alkylene radical having at least 1, but not more than 3, hydroxy group(s) and either R² and R³ independently of one another represent C₁-C₁₀-alkyl which is optionally substituted by 1 to 3 radicals from the group comprising hydroxy, amino and halogen, or C₅-C₇-cycloalkyl, or C₆-C₁₂-aryl, with the proviso that the total amount of the carbon atoms of R² and R³ is not less than 3,
         or
      R² and R³ together represent an alkylene radical which, together with the carbon atom which carries the radicals R² and R³, forms a 5-7-membered ring, it being possible for this alkylene radical, for its part, to be substituted by C₁-C₆-alkyl groups;
   c) compounds of formula (II): 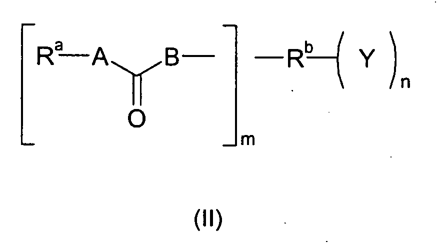 wherein
      R^{a} denotes C₄-C₂₀-alkyl, C₅-C₂₀-cycloalkyl or -heterocycloalkyl or C₅-C₂₀-alkoxy, C₆-C₁₂-aryl, C₅-C₁₀-heteroaryl or C₇-C₁₁-aralkyl,
      R^{b} denotes an m + w · n-valent aliphatic C₁-C₈ radical, a cycloaliphatic or heterocycloaliphatic C₃-C₁₅ radical, an araliphatic C₇-C₂₀ radical, an alkoxy- or acyloxy-containing aliphatic C₃-C₁₅ radical,
      A and B independently of one another denote -O-, -S- or -NH-,
      Y denotes hydroxy, C₁-C₁₀-alkoxy, C₂-C₆-acyloxy, amino, mercapto or -O-Z-O-
      Z denotes C₁-C₆-alkylene,
      w denotes the valency of the radical Y and
      m and n independently of one another denote integers from 1 to 8, with the proviso that the sum of m + n is not more than 12;
   d) compounds of formula (III): 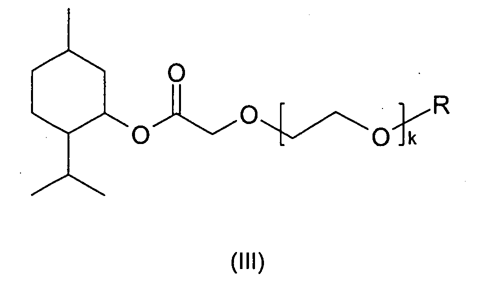 wherein
      R = H and k is an integer from 1 to 4, or R = CH₃ and k is an integer from 0 to 4;
   e) compounds of formula (IV): 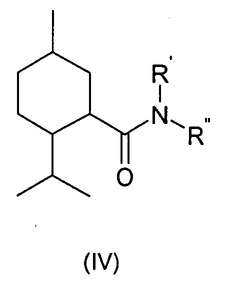 wherein
      R' is H or an alkyl, cycloalkyl, alkenyl, cycloalkenyl, hydroxyalkyl, alkynyl, acyloxyalkyl, alkoxyalkyl, aminoalkyl, acylaminoalkyl, carboxyalkyl radical or an alkylcarboxyalkyl radical of the formula -CₚH₂ₚCOOR''', wherein -CₚH₂ₚ is a straight or branched chain alkylene group in which p is an integer from 1 to 6 and R'" is C₁-C₈-alkyl, each of said radicals containing up to 25 carbon atoms, and
      R" is hydroxy or an alkyl, cycloalkyl, alkenyl, cycloalkenyl, hydroxyalkyl, alkynyl, acyloxyalkyl, alkoxyalkyl, aminoalkyl, acylaminoalkyl, carboxyalkyl radical or an alkylcarboxyalkyl radical of the formula -CₚH₂ₚCOOR''', wherein -CₚH₂ₚ is a straight or branched chain alkylene group in which p is an integer from 1 to 6 and R'" is C₁-C₈-alkyl, each of said radicals containing up to 25 carbon atoms; with the proviso that when R' is hydrogen R" may also be an aryl radical of up to 10 carbon atoms selected from benzyl and substituted phenyl wherein the substituents are selected from C₁-C₄ alkyl, hydroxy and C₁-C₄-alkoxy, nitro and halogen;
   f) compounds of formula (V): 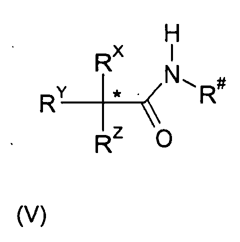 wherein
      R^{#} is C₁-C₅-alkyl, C₁-C₈-hydroxyalkyl or alkylcarboxyalkyl with up to 6 carbon atoms,
      R^{X} is hydrogen or C₁-C₅-alkyl; and
      R^{Y} and R^{Z} independently are C₁-C₅-alkyl,
      with the provisos that
      R^{X}, R^{Y} and R^{Z} together provide a total of at least 5 carbon atoms, preferably 5-10 carbon atoms, and
      when R^{X} is hydrogen, R^{Y} is C₂-C₅-alkyl and R^{Z} is C₃-C₅-alkyl and at least one of R^{Y} and R^{Z} is branched, preferably in alpha or beta position relative to the carbon atom marked (*) in the formula (V);
   g) compounds of the group
      menthone, menthylmethylether, limonene, monomenthyl succinate
      and
(iii) a film forming agent.

Examples of alkyl groups include methyl, ethyl, n-propyl, isopropyl, n-butyl, sec.-butyl, isobutyl and tert.-butyl.

Examples of alkenyl groups include ethenyl, propenyl, 2-methyl propenyl, n-butenyl.

Examples of alkoxy groups include methoxy, ethoxy, n-propoxy, isopropoxy, n-butoxy, isobutoxy, sec.-butoxy, tert.-butoxy.

All of the isomeric forms of menthol and/or isopulegol and the compounds listed under ii) a) to g), above, may be used in practicing this invention, including structural isomers and stereoisomers.

The mixture of menthol and/or isopulegol and the compounds listed under ii) a) to g), above, is present in the coating composition in an amount effective to inhibit the attachment of biofouling organisms on a surface to which the composition is applied as a coating.

Also in accordance with this invention, there is provided a paint comprising the above-described composition, preferably a marine paint.

There is also provided in accordance with this invention certain methods of use of coating materials including menthol and/or isopulegol and the compounds listed under ii) a) to g) above. One such method involves protecting a surface exposed to an aqueous environment from fouling organisms present in the aqueous environment by applying to such surface a coating including one or more of the above-described compounds. Another method entails protecting a coated surface from attachment and growth of undesired fungal organisms, such as molds, mildew and the like by including in the coating formulation applied to such surface at least one of the above-described compounds.

As another aspect of this invention, articles are provided which have a coating of the composition described herein on at least a portion of the surface thereof, which provides protection against exposure to the deleterious effects of biofouling organisms.

The coating composition described above satisfies all of the above-noted criteria for an environmentally acceptable coating product, in that it provides effective protection against attachment and growth of biofouling organisms, while producing no known ecologically harmful effect. Moreover, menthol and the compounds listed under ii) a) to g) above have been shown to be compatible, both chemically and physically, with conventional marine and other paint formulations, are safe to handle and can be obtained at a relatively low cost.

### Detailed Description of The Invention

It has been discovered in accordance with the present invention, that the compounds listed under ii) a) to g), above, are useful for inhibiting the attachment of biofouling organisms on surfaces, particularly those of underwater structures, to which a coating composition comprising one or more such compounds is applied, in particular when they are combined with menthol and/or isopulegol. Such a mixture or combination shows a synergistically enhanced activity in comparison with menthol and/or isopulegol.

As used herein, the term "biofouling organisms" refers to any and all organisms that participate in the fouling sequence in both saltwater and freshwater environments, including, without limitation, bacteria, diatoms, hydrids, algae, bryozoans, protozoans and macro-foulants.

The menthol according to the present invention advantageously is I-menthol or racemic menthol, preferably I-menthol.

The isopulegol according to the present invention advantageously is (-)-isopulegol or racemic isopulegol, preferably racemic isopulegol.

Advantageous compounds which have been found to be effective antifouling agents for a prolonged period of time are compounds selected from (ii) a), above, i.e. menthyl esters, in particular esters of I-menthol, of beta-hydroxybutyric acid, alpha-hydroxyisovaleric acid, alpha-hydroxycapronic acid, alpha-hydroxy-alpha-methyl-valeric acid, glycolic acid and lactic acid, preferred is menthyllactate. This compound is commercially available, e.g. as Frescolat ML® (Haarmann & Reimer). Particularly preferred is the ester of I-menthol and racemic lactic acid (I-menthyllactate).

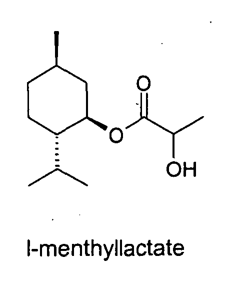

Menthyl esters according to (ii) a), above, are well known and described in DE 26 08 226, incorporated herein by reference in its entirety.

Advantageous compounds which have been found to be effective antifouling agents for a prolonged period of time are compounds selected from (ii) b), above, are compounds of formula (Ia) to (Id), 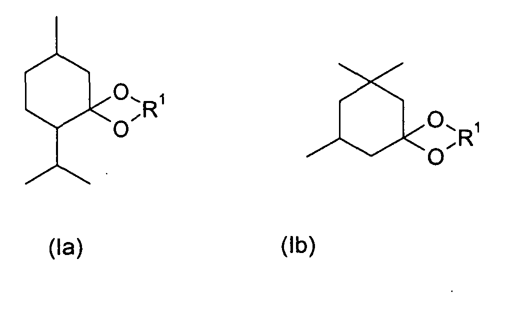 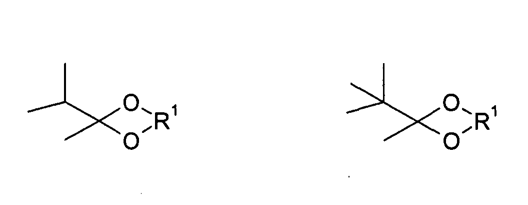 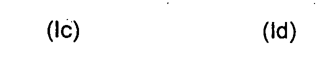 wherein R¹ has the meaning described above, preferably R¹ denotes

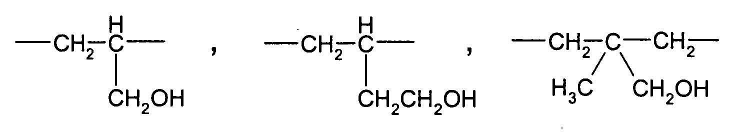

The preferred compound of (ii) b) is menthone glycerin acetal. This compound is commercially available, e.g. as Frescolat MGA® (Haarmann & Reimer). Depending on the starting material and the preparation methods used, menthone glycerin acetal can be used as mixtures of optical isomers or in the form of the pure isomers. Particularly preferred is a mixture of diastereomers of formula (Iaa).

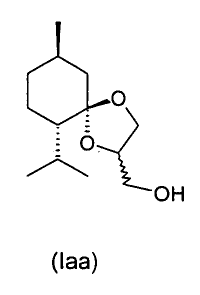

The compounds according to (ii) b), above, in particular the formulas (Ia) to (Id), above, are well known and described in EP 0 507 190, incorporated herein by reference in its entirety.

Advantageous compounds which have been found to be effective antifouling agents for a prolonged period of time are compounds selected from (ii) c), above, are compounds of formula (IIa) to (IIj),

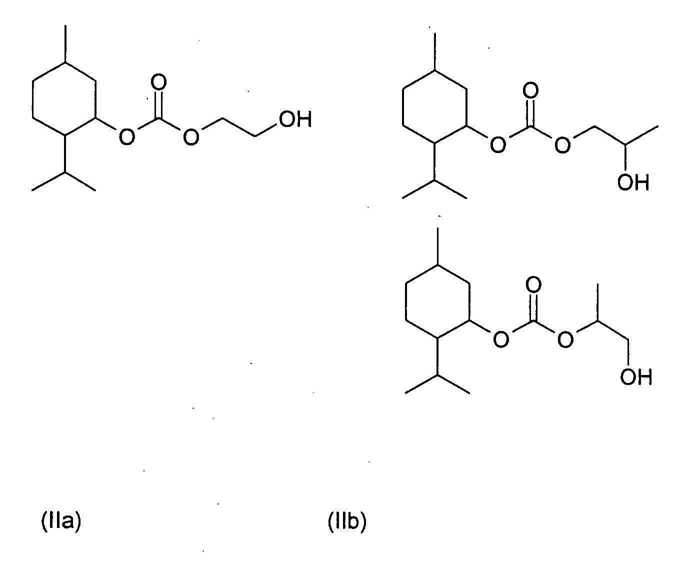

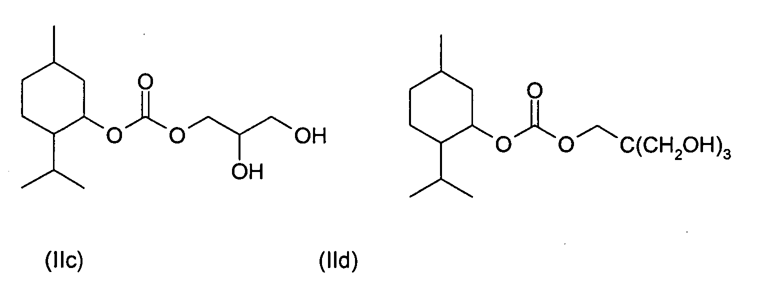

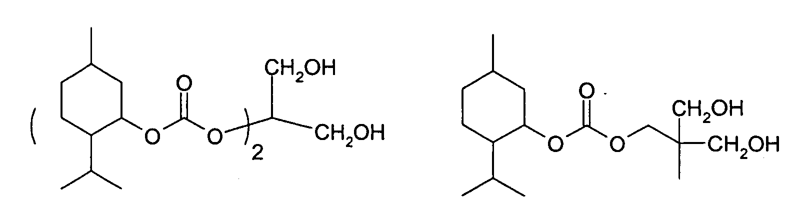

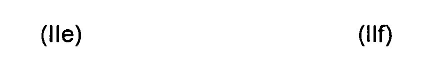

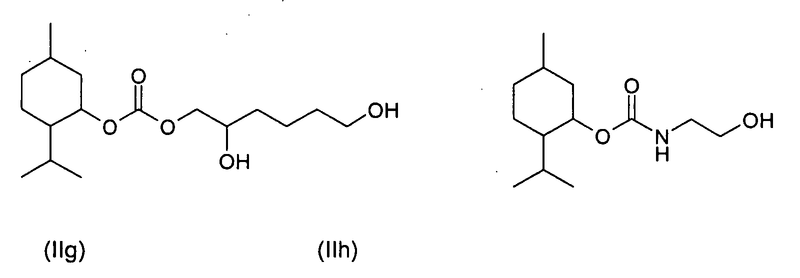

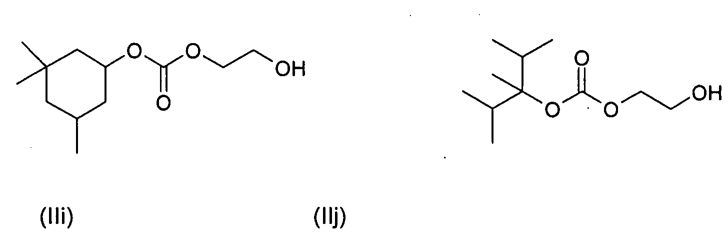

Particularly preferred are menthol glycol carbonate (IIa), menthol propyleneglycol carbonate (IIb) and menthol glycerin carbonate (IIc). Depending on the starting material and the preparation methods used, the carbonates (IIa), (IIb) and (IIc) can be used as mixtures of optical isomers or in the form of the pure isomers. Preferred are the compounds (IIa), (IIb) and (IIc) as derived from I-menthol. The compounds according to (ii) c), above, in particular the formulas (IIa) to (IIj), above, are well known and described in EP 0 583 651, incorporated herein by reference in its entirety.

Advantageous compounds which have been found to be effective antifouling agents for a prolonged period of time are compounds selected from (ii) d), above, are menthyl methoxyacetate and menthyl 3,6-dioxaheptanoate, particularly preferred are the menthyl esters of I-menthol. The compounds according to (ii) d), above, are well known and described in DE 191 547 and EP 1 034 161, incorporated herein by reference in their entirety.

The preferred compound which has been found to be an effective antifouling agent for a prolonged period of time selected from (ii) e), above, is N-ethyl-p-menthane-3-carboxamide of formula (IVa) (also known as WS-3, commercially available) which can be used as a mixture of optical isomers or in the form of the pure isomers, advantageous is the isomer of formula (IVb).

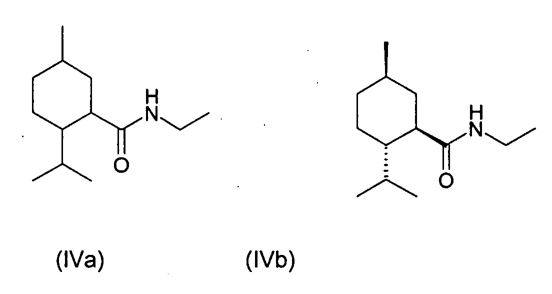

The compounds according to (ii) e), above, are well known and described in US 4,136,163, incorporated herein by reference in its entirety.

The preferred compound which has been found to be an effective antifouling agent for a prolonged period of time selected from (ii) f), above, is 2-isopropyl-N-2,3-trimethylbutanamide of formula (Va) (also known as WS-23, commercially available).

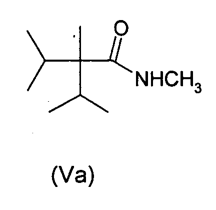

The compounds according to (ii) f), above, are well known and described in US 4,230,688, incorporated herein by reference in its entirety.

The ratio by weight of menthol and/or isopulegol to the total of compounds listed under ii) a) to g), above, typically between 20 : 1 and 1 : 5, preferably between 10 : 1 and 1 : 2. When menthol and isopulegol are used together in the composition, the ratio of menthol : isopulegol typically lies in the range of 1 : 10 and 10 : 1, preferably between 1 : 5 and 5 : 1.

In a preferred embodimement a combination of menthol, isopulegol and menthol propyleneglycol carbonate, is used; the ratio of isopulegol : menthol being 3 : 1 to 1 : 2, the ratio of menthol propyleneglycol carbonate : isopulegol being 2 : 1 - 1 : 5. In a particular preferred embodiment the ratio menthol propyleneglycol carbonate : isopulegol : menthol is about 1 : 2 : 1.

The compounds used in the present invention may be synthesized from readily available starting materials using known synthetic routes or are commercially available.

Optionally, the compositions according to the invention may comprise cyclic alpha-keto enamines, as described in J. Agric. Food Chem. 49, 5383-5390 (2001), preferably 5-methyl-4-(1-pyrrolidinyl)-3-[2H]-furanone, 4,5-dimethyl-3-(1-pyrrolidinyl)-2[5H]-furanone and 4-methyl-3-(1-pyrrolidinyl)-2[5H]-furanone.

Menthol and/or isopulegol and the compounds listed under ii) a) to g), above, may be included in a conventional paint composition as the sole antifouling agent, or added in combination with other antifouling agents, biocides, antibiotics, and natural products or extracts to produce an additive or synergistic effect on attachment of biofouling organisms. Examples of non-toxic antifouling agents include decalactone, alpha-angelicalactone, alpha-santonin, alpha-methyl-gamma-butyrolactone and alantolactone. Exemplary biocides (fungicides and algaecides) include isothiazolones (such as Sea Nine-211), zinc omadine® (2-pyridinethiol-1-oxide, zinc complex), chlorothalonil, and triazine algaecide. A typical example of a suitable antibiotic is tetracycline, which is a registered antifoulant.

Menthol and/or isopulegol and the compounds listed under ii) a) to g), above may also be combined with organometallic antifoulants, such as tributyl tin or triphenyl tin, or inorganic antifoulants such as zinc oxide or cuprous oxide, to reduce the total amount of toxic antifoulants in a given coating material.

The film-forming component of the composition of the present invention may be any component or combination of components that is readily applied and adheres to the surface to be protected when the surface is submerged. The specific film-forming component to be selected for a particular application will vary depending on the material and construction of the article to be protected and the performance requirements thereof. After a surface is provided with a protective coating in accordance with this invention, the active ingredients menthol and/or isopulegol and at least one compound listed under ii) a) to g), that are present in the coating comes in contact with biofouling organisms, thereby preventing their attachment. A variety of synthetic polymers are useful for this purpose. Examples of suitable polymer resins include unsaturated polymer resins, vinyl ester, vinyl acetate, and vinyl chloride based resins and urethane based resins. Unsaturated polyester resins are formed from unsaturated acids and anhydrides, saturated acids and anhydrides, glycols, and glycol monomers. Preferred film-forming components are mixtures of natural rosin and vinyl chloride-vinyl acetate co-polymers. A commercial marine paint vehicle which is suitable for the practice of this invention is Amerlock 698, a product of Ameron International, Pasadena, CA. Comparable marine paint vehicles are also available from Jotan, AS, Sandefjord, Norway.

The coating composition of the invention may include components in addition to menthol and/or isopulegol and the compounds listed under ii) a) to g), above, and a film-forming component, so as to confer one or more desirable properties, such as increased or decreased hardness, strength, increased or decreased rigidity, reduced drag, increased or decreased permeability, or improved water resistance. The selection of a particular component or group of components to impart such properties are within the capabilities of those having ordinary skill in the art.

The coating composition of the present invention may be used in various paint formulations, marine paints being preferred.

The percentage of the active agent (be it a single compound or a mixture), i.e. one or more of the compounds listed under ii) a) to g) above and, preferably, menthol and/or isopulegol, in the coating composition required for effective protection against biofouling agents may vary depending on the active agent itself, the chemical nature of the film former, as well as other additives present in the composition that may influence the effectiveness of the active agent. Generally, the active agent comprises between about 0.01 and about 50 percent of the coating composition by weight, and preferably between about 0.1 and about 10 percent by weight of the composition.

The compounds listed under ii) a) to g), above and, if present, menthol and/or isopulegol may be included in a non-toxic paint, coating composition or paint formulation during the paint/coating manufacturing processes or added to the paint/coating base mixture at the time of use. Menthol and/or isopulegol (if present) and the compounds listed under ii) a) to g), above, can be simply mixed into the film-forming components. This is known as a "free association" coating, which allows leaching of the menthol and/or isopulegol and the compounds listed under ii) a) to g), above, from the film-forming components. The antifouling agent may be covalently bound to the resin, known as "ablative or self-polishing coating" and is released only after the bond hydrolyzes in seawater. Controlled hydrolysis permits a slow release rate while creating a hydrophilic site on the resin. A new layer of bound menthol and/or isopulegol and compounds listed under ii) a) to g), above, is then exposed when the hydrolyzed layer is washed away. See also, Tiller et al. in Proc. Natl. Acad. Sci., 2001, 98, 5981-5985, the entire contents of which are incorporated by reference herein. Furthermore, menthol and/or isopulegol (if present) and the compounds listed under ii) a) to g), above, may also be incorporated with slow release materials which permit the controlled release of the compounds into the matrix of the coating, thereby prolonging the effectiveness of the coating and reducing the amount of compounds necessary to produce the antifouling effect. Encapsulation into such slow release materials also protects menthol and/or isopulegol and the compounds listed under ii) a) to g), above, from the harsh chemical milieu of the coating and would reduce degradation of the compounds while trapped in the resin, if they were susceptible to degradation. Examples of these slow release materials include: a) microcylinders composed of metallic cylinders or modified molecules such as 1,2-bis-(10,12-tricosadinoyl)-glycer-3-phosphocholine; (b) liposomes; and (c) cyclodextrins.

While not wishing to be bound to a specific theory regarding the mechanism of action, it is believed that the active agent of the coating composition of this invention, i.e. menthol and/or isopulegol and at least one of the compounds listed under ii) a) to g), above, function by producing an environment at the surface of a coated substrate which repels biofouling organisms, thereby preventing their attachment and growth on the coated surface. In this connection, it is conjectured that the menthol and/or isopulegol and the compounds listed under ii) a) to g), above, act as antifoulants by interacting with the cold receptors of the fouling organisms to induce chemotaxis. It is believed that this interaction need not be permanent, and accordingly there is no need for the menthol and/or isopulegol and the compounds listed under ii) a) to g), above, to be irreversibly consumed in order to exhibit antifoulant activity. It would therefore be desirable to attach the menthol and/or isopulegol and the compounds listed under ii) a) to g), above, covalently to the film-forming agent, thereby obtaining a coating whose antifoulant ingredient will not be released into the marine environment. The inhibitory effect on the microorganisms may, however, be produced by inhalation, respiration, digestion or imbibition of the active agent by the microorganisms.

Also within the scope of this invention is any article having a surface coated with a coating containing menthol and/or isopulegol and at least one compound listed under ii) a) to g), above. The coated articles of the invention can comprise any material to which biofouling organisms are prone to attach, such as metal, wood, concrete, plastic, composite and stone. Representative examples of articles which may benefit from a coating which inhibits attachment and growth of such organisms include boats and ships, and particularly their hulls, berthing facilities, such as piers and pilings, buoys, offshore rigging equipment, intake screens for water distribution systems and decorative or functional cement or stone formations.

Further aspects of the present invention are the following:
- The use of a compound selected from the group consisting of any of the compounds listed under ii) a) to g) above, and mixtures thereof, as antifouling agent.
- The use of a compound selected from the group consisting of any of the compounds listed under ii) a) to g) above, and mixtures thereof, for protecting a surface exposed to an aqueous environment from fouling organisms present in said aqueous environment.
- The use of a compound selected from the group consisting of any of the compounds listed under ii) a) to g) above, and mixtures thereof, for producing a marine paint composition for protecting a surface exposed to an aqueous environment from fouling organisms present in said aqueous environment.
- In the uses stated before the compound is preferably selected from the group consisting of I-menthyllactate, menthone glycerin acetal, menthol glycol carbonate (IIa), menthol propyleneglycol carbonate (IIb), menthol glycerin carbonate (IIc), N-ethyl-p-menthane-3-carboxamide, 2-isopropyl-N-2,3-trimethylbutanamide, menthyl methoxyacetate, menthyl 3,6-dioxaheptanoate, and mixtures thereof.
- A marine paint composition comprising
   a) one or more compounds selected from the group consisting of the compounds listed under ii) a) to g) above,
   b) a film forming agent,
   c) optionally, one or more typical additives, and
   d) optionally, menthol and / or isopulegol,
wherein the total amount of components a) and, if present, d) is effective for inhibiting or preventing fouling organisms, when the marine paint is applied to a substrate and the substrate is thereafter exposed to sea water.

The use of a mixture of (a) one or more compounds selected from the group consisting of the compounds listed under ii) a) to g) above and (b) menthol and / or isopulegol is preferred as such mixture shows a synergistically enhanced activity (see Example 2 below).

The following examples are provided to describe the invention in further detail. These examples are intended merely to illustrate specific embodiments of the compositions, methods and coated articles of the invention, and should in no way be construed as limiting the invention. These examples provide the results of tests conducted to determine the efficacy of certain compounds of the invention in inhibiting settlement of biofouling organisms.

### EXAMPLE 1

### Antifouling Test Methods

### a.. Collection and Culture of Barnacles

Adults of the barnacle, *Balanus amphitrite* Darwin, were collected from the Sacred Heart Marine Research Center at St. Mary's College in Tuticorin, India. The barnacles were crushed and the nauplius stage larvae were collected for culture to the cyprid stage following the method of Rittschof et al., J.Exp. Mar. Biol. Ecol., 82:131-146 (1984). The cyprid is the stage at which the barnacle larva is competent to attach to surfaces. Upon attachment to a surface, the larva then undergoes metamorphosis into a barnacle.

### b. Settlement Assay

Barnacle settlement assays were undertaken using the method described previously by Rittschof et al., J.Chem. Ecol., 11: 551-563 (1985). Briefly, Falcon 50x9 mm plastic petri dishes were filled with 5 ml of filtered seawater at salinity of 33-35 parts per thousand (ppt) and into which 3-day old cyprid stage larvae were added. Menthol and/or isopulegol and/or compounds listed under ii) a) to g), above, were introduced at various concentrations into the dishes containing seawater. Controls were represented by those dishes in which no test compound were added. After incubation at 28°C for 9 hours, the dishes were examined under a dissecting microscope to determine if there was any mortality. The larvae were then killed with 10% formalin and the number of attached and unattached larvae were counted. Settlement data were expressed as the percentage of the larvae attached to the bottom of the dish.

The settlement assay was used to determine the effective concentration of a number of different compounds listed under ii) a) to g), above. The effective concentration (EC₅₀) is that concentration which inhibited the settlement of fifty percent (50%) of the cyprid stage of the barnacle larvae present in a test sample. The results are shown in Table II and Table III.

The racemic (±) compounds are denoted with the prefix rac-.

**TABLE I**

| **COMPOUND** | **EC**_{**50**} **(mg/ml)** |
|---|---|
| 1R,2S,5R-(-)-menthol (= I-menthol) | 4 * 10⁻³ (see WO 01/95718) |
| 1S,2R,5S-(+)-menthol | 0.1 (see WO 01/95718) |
| rac-menthol | 0.1 (see WO 01/95718) |
| (-)-menthone | 0.001 (see WO 01/95718) |
| (-)-isopulegol | 8.8 * 10⁻⁵ (see WO 01/95718) |
| rac-isopulegol | 2,9 * 10⁻⁵ |
| mentylmethylether | 1,1 * 10⁻⁴ |
| I-menthyl propyleneglycol carbonate | 2,2 * 10⁻⁶ |
| I-menthyl lactate | 2,0 * 10⁻⁶ |
| rac-menthone glycerin acetal | 4,9 * 10⁻⁵ |
| menthone glycerin acetal | 5,2 * 10⁻⁷ |
| d-limonene | 2,9 * 10⁻⁵ |

**TABLE II**

| | | |
|---|---|---|
| | | |

| **COMPOUNDS** | **ratio by weight** | **EC**_{**50**} **(mg/ml)** |
|---|---|---|
| | | |
| I-menthol / I-menthone | 60 : 40 | 1,5 * 10⁻⁶ |
| I-menthol / I-menthone / d-isomenthone | 60 : 30 : 10 | 2,1 * 10⁻⁷ |
| I-menthol / rac-menthone | 60 : 40 | 3,2 * 10⁻⁷ |
| I-menthol / rac-isopulegol | 50 : 50 | 1,8 * 10⁻⁵ |

### EXAMPLE 2

### Inhibition of Fouling Organisms Using

### a Marine Paint Composition Containing

### (-)-menthol, rac-isopulegol and I-menthol propyleneaglycol carbonate Separately and in Combination

A floating platform was constructed using layers of bamboo and styrofoam floats. The platform was designed with holders to accommodate test panels measuring 4 inches x 12 inches x 0.25 inches.

A first experimental paint was prepared, containing a biocidally effective amount of cuprous oxide and no other biocide which was used as the control. To this composition was added a combination of 0.5% by weight of rac-isopulegol, 0.25% of (-)-menthol and 0.25% of I-menthol propyleneglycol carbonate (Composition A). A second paint composition was prepared from the same marine paint vehicle containing cuprous oxide, to which was added 2% by weight of (-)-menthol (Composition B). A third formulation was made from the same cuprous oxide-containing marine paint vehicle, to which was added 2% by weight of rac-isopulegol (Composition C). A fourth formulation was made from the same cuprous oxide-containing marine paint vehicle, to which was added 2% by weight of I-menthol propyleneglycol carbonate (Composition D).

Solid iron panels having the above-mentioned dimensions were painted with the paint formulations thus prepared, placed in the holders in the floating platform and submerged continuously near the center of Bitac Cove in San Dionisio Bay (Philippines) for a period of 78 weeks. The panels were examined for a few minutes every three months and immediately resubmerged after photography. After 78 weeks, the panels were removed and inspected. The numbers of barnacles attached to the panels were counted. The major fouling organisms included the barnacle, *Balanus amphitrite* communis, and the rock oyster, *Crossostrea cuculata.*

The data obtained are set forth in Table III below. These data show that rac-isopulegol, 0.25% of (-)-menthol and 0.25% of I-menthol propyleneglycol carbonate each are effective antifouling agents with settlement rates of 16.1, 12.2% and 23.4%, respectively. When the three compounds were used in combination at the lower concentrations of 0.5% and 0.25% respectively the protective effect was more evident, with a settlement rate of 2.0%.

**TABLE III**

| **Concentration (% bv weight)** | | | | |
|---|---|---|---|---|
| **PAINT COMPOSITION** | **racemic isopulegol** | **(-)-menthol** | **I-menthol propyleneglycol carbonate** | **% Settlement** |
| CONTROL | 0 | 0 | 0 | 100 |
| COMPOSITION A | 0.5 | 0.25 | 0.25 | 2.0 |
| COMPOSITION B | __ | 2.0 | __ | 16.1 |
| COMPOSITION C | 2.0 | __ | __ | 12.2 |
| COMPOSITION D | __ | __ | 2.0 | 23.4 |

The foregoing example clearly demonstrates that the compositions of the present invention containing menthol and/or isopulegol and compounds listed under ii) a) to g), above, are effective in preventing the attachment of fouling marine algae and planktonic organisms on the surfaces of underwater structures to which the composition is applied as a coating. These data further show the long lasting activity of the compositions of the invention and the synergistic effect of the components on each other.

## Claims

1. A non-toxic paint or coating composition comprising
(i) menthol and / or isopulegol
and
(ii) a compound selected from the group consisting of
a) menthyl esters of a natural occuring hydroxycarboxylic acid having 2 to 6 carbon atoms, which are in turn optionally esterified by C₁-C₄ carboxylic acids on the hydroxy group;
b) compounds of formula (I): 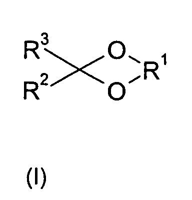 wherein
R¹ represents a C₂-C₆-alkylene radical having at least 1, but not more than 3, hydroxy group(s) and
either R² and R³ independently of one another represent C₁-C₁₀-alkyl which is optionally substituted by 1 to 3 radicals from the group comprising hydroxy, amino and halogen, or C₅-C₇-cycloalkyl, or C₆-C₁₂-aryl, with the proviso that the total amount of the carbon atoms of R² and R³ is not less than 3,
or
R² and R³ together represent an alkylene radical which, together with the carbon atom which carries the radicals R² and R³, forms a 5-7-membered ring, it being possible for this alkylene radical, for its part, to be substituted by C₁-C₆-alkyl groups;
c) compounds of formula (II): 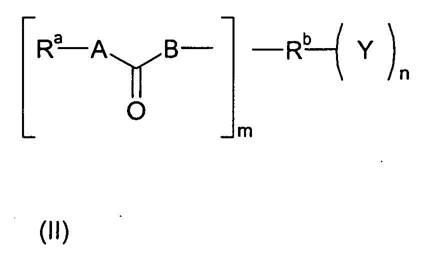 wherein
R^{a} denotes C₄-C₂₀-alkyl, C₅-C₂₀-cycloalkyl or -heterocycloalkyl or C₅-C₂₀-alkoxy, C₆-C₁₂-aryl, C₅-C₁₀-heteroaryl or C₇-C₁₁-aralkyl;
R^{b} denotes an m + w · n-valent aliphatic C₁-C₈ radical, a cycloaliphatic or heterocycloaliphatic C₃-C₁₅ radical, an araliphatic C₇-C₂₀ radical, an alkoxy- or acyloxy-containing aliphatic C₃-C₁₅ radical;
A and B independently of one another denote -O-, -S- or -NH-;
Y denotes hydroxy, C₁-C₁₀-alkoxy, C₂-C₆-acyloxy, amino, mercapto or -O-Z-O-;
Z denotes C₁-C₆-alkylene;
w denotes the valency of the radical Y and
m and n independently of one another denote integers from 1 to 8, with the proviso that the sum of m + n is not more than 12;
d) compounds of formula (III): 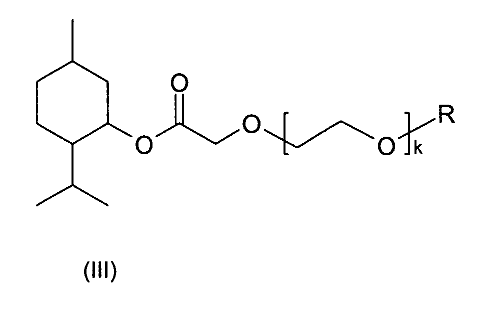 wherein
R = H and k is a whole number from 1 to 4, or R = CH₃ and k is a whole number from 0 to 4;
e) compounds of formula (IV): 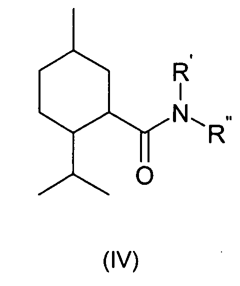 wherein
R' is H or an alkyl, cycloalkyl, alkenyl, cycloalkenyl, hydroxyalkyl, alkynyl, acyloxyalkyl, alkoxyalkyl, aminoalkyl, acylaminoalkyl, carboxyalkyl radical or an alkylcarboxyalkyl radical of the formula -CₚH₂ₚCOOR''', wherein -CₚH₂ₚ is a straight or branched chain alkylene group in which p is an integer from 1 to 6 and R"' is C₁-C₈-alkyl, each of said radicals containing up to 25 carbon atoms, and
R" is hydroxy or an alkyl, cycloalkyl, alkenyl, cycloalkenyl, hydroxyalkyl, alkynyl, acyloxyalkyl, alkoxyalkyl, aminoalkyl, acylaminoalkyl, carboxyalkyl radical or an alkylcarboxyalkyl radical of the formula -CₚH₂ₚCOOR''', wherein -CₚH₂ₚ is a straight or branched chain alkylene group in which p is an integer from 1 to 6 and R'" is C₁-C₈-alkyl, each of said radicals containing up to 25 carbon atoms; with the proviso that when R' is hydrogen R" may also be an aryl radical of up to 10 carbon atoms selected from benzyl and substituted phenyl wherein the substituents are selected from C₁-C₄ alkyl, hydroxy and C₁-C₄-alkoxy, nitro and halogen;
f) compounds of formula (V): 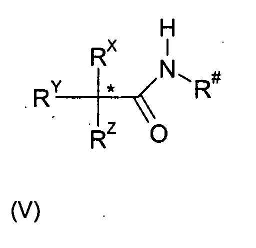 wherein
R^{#} is C₁-C₅-alkyl, C₁-C₈-hydroxyalkyl or alkylcarboxyalkyl with up to 6 carbon atoms,
R^{X} is hydrogen or C₁-C₅-alkyl; and
R^{Y} and R^{Z} independently are C₁-C₅-alkyl,
with the provisos that
R^{X}, R^{Y} and R^{Z} together provide a total of at least 5 carbon atoms, preferably 5-10 carbon atoms, and
when R^{X} is hydrogen, R^{Y} is C₂-C₅-alkyl and R^{Z} is C₃-C₅-alkyl and at least one of R^{Y} and R^{Z} is branched, preferably in alpha or beta position relative to the carbon atom marked (*) in the formula (V);
g) compounds of the group
menthone, menthylmethylether, limonene, monomenthyl succinate
and
(iii) a film forming agent.

2. A composition according to claim 1, wherein said compounds are present in an amount from about 0.01 to about 50 percent by weight of said composition.

3. A composition according to claim 1, wherein the compound selected from (ii) a), above, is I-menthyllactate.

4. A composition according to claim 1, wherein the compound selected from (ii) b), above, is menthone glycerin acetal.

5. A composition according to claim 1, wherein the compounds selected from (ii) c), above, are menthol glycol carbonate (IIa), menthol propyleneglycol carbonate (IIb) and menthol glycerin carbonate (IIc).

6. A composition according to claim 1, wherein the compound selected from (ii) e), above, is N-ethyl-p-menthane-3-carboxamide.

7. A composition according to claim 1, wherein the compound selected from (ii) f), above, is 2-isopropyl-N-2,3-trimethylbutanamide.

8. A composition according to claim 1 comprising menthol, isopulegol and menthol propyleneglycol carbonate.

9. A paint comprising the composition of claim 1.

10. A paint according to claim 9, which is formulated as a marine paint.

11. Use of a composition according to any of claims 1-7, or a paint according to claim 9 or 10 for protecting a surface exposed to an aqueous environment from fouling organisms present in said aqueous environment.

12. A method for protecting a surface exposed to an aqueous environment from fouling organisms present in said aqueous environment, which comprises applying to said surface a coating including menthol and/or isopulegol and at least one compound listed under ii) a) to g) in claim 1.

13. A method according to claim 11, wherein said coating composition is applied to said surface by brushing, spraying or dipping.

14. An article having an underwater surface, at least a portion of said surface being coated with the composition of claim 1.

15. An article according to claim 14 in the form of a ship hull.

16. Use of a compound selected from the group consisting of any of the compounds listed under ii) a) to g) in claim 1, and mixtures thereof, as antifouling agent.

17. Use of a compound selected from the group consisting of any of the compounds listed under ii) a) to g) in claim 1, and mixtures thereof, for protecting a surface exposed to an aqueous environment from fouling organisms present in said aqueous environment.

18. Use of a compound selected from the group consisting of any of the compounds listed under ii) a) to g) in claim 1, and mixtures thereof, for producing a marine paint composition for protecting a surface exposed to an aqueous environment from fouling organisms present in said aqueous environment.

19. Use of a compound selected from the group consisting of any of the compounds listed under ii) a) to g) in claim 1, and mixtures thereof, for synergistically enhancing the antifouling effect of (a) menthol, (b) isopulegol or (c) a mixture of menthol and isopulegol.

20. Use according to any of claims 16-19, wherein the compound is selected from the group consisting of I-menthyllactate, menthone glycerin acetal, menthol glycol carbonate (IIa), menthol propyleneglycol carbonate (IIb), menthol glycerin carbonate (IIc), N-ethyl-p-menthane-3-carboxamide, 2-isopropyl-N-2,3-trimethylbutanamide, menthyl methoxyacetate, menthyl 3,6-dioxaheptanoate, and mixtures thereof.

21. Marine paint composition comprising
a) one or more compounds selected from the group consisting of the compounds listed under ii) a) to g) in claim 1,
b) a film forming agent,
c) optionally, one or more typical additives, and
d) optionally, menthol and / or isopulegol,
wherein the total amount of components a) and, if present, d) is effective for inhibiting or preventing fouling organisms, when the marine paint is applied to a substrate and the substrate is thereafter exposed to sea water.
